# EUROPÄISCHE PATENTANMELDUNG

(11) **EP 2 272 922 A1**
(43) Veröffentlichungstag der Anmeldung: **12.01.2011**
(21) Anmeldenummer: 09164941.8
(22) Anmeldetag: 08.07.2009
(51) Int. Cl.: C09D 4/00, C09J 4/00, C08K 3/00

(54) **(Meth)acrylatbasierende Zusammensetzungen mit verbesserter Haftung auf verzinkten Oberflächen**

(71) Anmelder: Sika Technology AG, 6340 Baar (CH)
(72) Erfinder: Haufe, Markus, 8048, Zürich (CH); Egli, Patricia, 8353, Elgg (CH)
(74) Vertreter: Sika Patent Attorneys

(57) **Zusammenfassung**

Die vorliegende Erfindung betrifft die Verwendung einer Zusammensetzung umfassend
a) mindestens ein (Meth)acrylatmonomer R;
b) mindestens eine Metallverbindung ausgewählt aus der Gruppe bestehend aus MgO, CaO und Ca(OH)₂,

als Klebstoff, Dichtstoff oder als Beschichtung für verzinkte Oberflächen.

## Beschreibung

### Technisches Gebiet

Die Erfindung betrifft das Gebiet der elastischen Klebstoffe, Dichtstoffe und Beschichtungen auf der Basis von (Meth)acrylatmonomeren.

### Stand der Technik

Verzinkte Oberflächen, insbesondere verzinkter Stahl, sind in der Industrie und im Baugewerbe vielfach eingesetzte Materialien. In besonderem Masse ist die Verwendung von verzinktem Stahl im Automobilbau verbreitet.

(Meth)acrylatbasierende Zusammensetzungen, wie sie zum Verkleben, Abdichten oder Beschichten verschiedener Substrate verwendet werden, zeigen auf verzinkten Oberflächen oftmals niedrige Haftungswerte oder sogar eine gänzlich inhibierte Haftung. Besonders kritisch sind dabei verzinkte Stähle, insbesondere verzinkte, nicht phosphatierte Stähle.

### Darstellung der Erfindung

Aufgabe der vorliegenden Erfindung ist es daher, eine (meth)acrylatbasierende Zusammensetzung bereitzustellen, welche auf verzinkten Oberflächen haftet und sich somit als Klebstoff, Dichtstoff oder als Beschichtung für derartige Oberflächen eignet.

Überraschenderweise wurde nun gefunden, dass diese Aufgabe durch die Verwendung gemäss Anspruch 1 gelöst wird.

Es war für den Fachmann in keiner Weise naheliegend, (meth)acrylatbasierende Zusammensetzungen umfassend mindestens eine Metallverbindung ausgewählt aus der Gruppe bestehend aus MgO, CaO und Ca(OH)₂ einzusetzen, um eine verbesserte Haftung von (meth)acrylatbasierenden Zusammensetzungen auf verzinkten Oberflächen, insbesondere auch auf besonders haftungsunfreundlichen Materialien wie verzinktem, nicht phosphatiertem Stahl zu erreichen. Dadurch können (meth)crylatbasierende Zusammensetzungen als Klebstoffe, Dichtstoffe und Beschichtungen für solche Oberflächen verwendet werden.

Weitere Aspekte der Erfindung sind Gegenstand weiterer unabhängiger Ansprüche. Besonders bevorzugte Ausführungsformen der Erfindung sind Gegenstand der abhängigen Ansprüche.

### Wege zur Ausführung der Erfindung

Die vorliegende Erfindung betrifft in einem ersten Aspekt die Verwendung einer Zusammensetzung umfassend
a) mindestens ein (Meth)acrylatmonomer **R;** sowie
b) mindestens eine Metallverbindung ausgewählt aus der Gruppe bestehend aus MgO, CaO und Ca(OH)₂,
als Klebstoff, Dichtstoff oder als Beschichtung für verzinkte Oberflächen.

Mit "Poly" beginnende Substanznamen wie beispielsweise Polyisocyanat, Polyurethan, Polyester oder Polyol bezeichnen im vorliegenden Dokument Substanzen, die formal zwei oder mehr der in ihrem Namen vorkommenden funktionellen Gruppen pro Molekül enthalten.

Der Begriff "Polymer" umfasst im vorliegenden Dokument einerseits ein Kollektiv von chemisch einheitlichen, sich aber in Bezug auf Polymerisationsgrad, Molmasse und Kettenlänge unterscheidenden Makromolekülen, das durch eine Polyreaktion (Polymerisation, Polyaddition, Polykondensation) hergestellt wurde. Der Begriff umfasst andererseits auch Derivate eines solchen Kollektivs von Makromolekülen aus Polyreaktionen, Verbindungen also, die durch Umsetzungen, wie beispielsweise Additionen oder Substitutionen, von funktionellen Gruppen an vorgegebenen Makromolekülen erhalten wurden und die chemisch einheitlich oder chemisch uneinheitlich sein können. Der Begriff umfasst im Weiteren auch so genannte Prepolymere, das heisst reaktive oligomere Voraddukte, deren funktionelle Gruppen am Aufbau von Makromolekülen beteiligt sind.

Der Begriff "Polyurethanpolymer" umfasst sämtliche Polymere, welche nach dem so genannten Diisocyanat-Polyadditions-Verfahren hergestellt werden. Dies schliesst auch solche Polymere ein, die nahezu oder gänzlich frei sind von Urethangruppen. Beispiele für Polyurethanpolymere sind Polyether-Polyurethane, Polyester-Polyurethane, Polyether-Polyharnstoffe, Polyharnstoffe, Polyester-Polyharnstoffe, Polyisocyanurate und Polycarbodiimide.
Unter "Molekulargewicht" versteht man im vorliegenden Dokument stets das Zahlenmittel des Molekulargewichts Mₙ.

Bei der verzinkten Oberfläche handelt es sich insbesondere um ein verzinktes Metall oder um eine verzinkte Metalllegierung. Vorzugsweise handelt es sich um verzinktes Eisen oder um verzinkten Stahl.
Als verzinkte Oberfläche wird eine Oberfläche bezeichnet, welche mit einer dünnen Schicht, typischerweise bis etwa 0.1 mm, aus Zink oder einer Zinklegierung überzogen ist. Das Verzinken einer Oberfläche erfolgt beispielsweise durch Feuerverzinken, galvanisches Verzinken, mechanisches Verzinken sowie durch weitere dem Fachmann bekannte Verfahren des Verzinkens.
Weiterhin ist die verzinkte Oberfläche insbesondere nicht phosphatiert.
Als phosphatierte Oberflächen werden hierbei Oberflächen verstanden, welche mit einer sauren, phosphathaltigen Lösung behandelt wurden, um darauf eine Schicht zu erzeugen, welche im Wesentlichen aus Phosphaten besteht. Die Phosphatanionen dieser Schicht stammen dabei aus der Lösung, das Kation stammt ebenfalls aus der Lösung oder aber aus dem Werkstoff der Oberfläche.
Meist bevorzugt handelt es sich bei der verzinkten Oberfläche um nicht phosphatierten, verzinkten Stahl.

Als (Meth)acrylatmonomere **R** eignen sich grundsätzlich beliebige (Meth)acrylatmonomere oder Verbindungen, welche mindestens eine radikalisch polymerisierbare (Meth)acrylatgruppe enthalten.

Geeignete (Meth)acrylatmonomere **R** sind insbesondere ausgewählt aus der Gruppe bestehend aus Methyl(meth)acrylat, Ethyl(meth)acrylat, n- und i-Butyl(meth)acrylat, Hexyl(meth)acrylat, 2-Ethylhexyl(meth)acrylat, Isodecyl-(meth)acrylat, Cyclohexyl(meth)acrylat, 3-Tetrahydrofuryl(meth)acrylat, Iso-bornyl(meth)acrylat, Norbornyl(meth)acrylat, Trimethylcyclohexyl(meth)acrylat, Benzyl(meth)acrylat, 2-Hydroxyethyl(meth)acrylat, 2- und 3-Hydroxypropyl-(meth)acrylat, Tetrahydrofurfuryl(meth)acrylat, 2-(2-Ethoxyethoxy)ethyl(meth)-acrylat, Butyldiglykol(meth)acrylat, Isotridecyl(meth)acrylat, Lauryl(meth)-acrylat, Stearyl(meth)acrylat, Phenoxyethyl(meth)acrylat, Dicyclopentadienyl-oxyethyl(meth)acrylat, Dihydrodicyclopentadienyl(meth)acrylat und ethoxyliertem Nonylphenol(meth)acrylat.

Bevorzugte (Meth)acrylatmonomere **R** sind ausgewählt aus der Gruppe bestehend aus Methylmethacrylat (MMA), Tetrahydrofurfurylmethacrylat (THFMA), Cyclohexylmethacrylat (CHMA), Isobornylmethacrylat (IBMA), Trimethylcyclohexylmethacrylat (TMCHMA), Hydroxyethylmethacrylat (HEMA) und Hydroxypropylmethacrylat (HPMA).

Selbstverständlich ist es möglich und kann sogar von Vorteil sein, Mischungen der vorhergehend beschriebenen (Meth)acrylatmonomere **R** einzusetzen.

Der Anteil an (Meth)acrylatmonomer **R** beträgt vorzugsweise 35 bis 75 Gew.-%, insbesondere 40 bis 70 Gew.-%, bevorzugt 45 bis 55 Gew.-%, an der gesamten Zusammensetzung.

Die Zusammensetzung, welche als Klebstoff, Dichtstoff oder als Beschichtung für verzinkte Oberflächen verwendet wird umfasst weiterhin mindestens eine Metallverbindung ausgewählt aus der Gruppe bestehend aus MgO, CaO und Ca(OH)₂. Insbesondere ist die Metallverbindung MgO.
Diese Metallverbindungen können natürlicher Art oder synthetisch hergestellt sein und werden insbesondere als Pulver eingesetzt. Bevorzugt weisen sie eine hohe spezifische Oberfläche auf.

Der Anteil der Metallverbindung beträgt vorzugsweise 0.1 bis 10 Gew.-%, insbesondere 0.1 bis 5 Gew.-%, bevorzugt 0.5 bis 3 Gew.-%, an der gesamten Zusammensetzung.

Neben den vorhergehen beschriebenen (Meth)acrylatmonomeren **R** kann die Zusammensetzung weitere radikalisch polymerisierbare Bestandteile aufweisen. Beispielsweise sind dies vernetzende Monomere wie Allyl(meth)-acrylat oder vernetzende difunktionelle oder höher funktionelle (Meth)acrylate wie oligomere oder polymere Verbindungen der Formel (II).

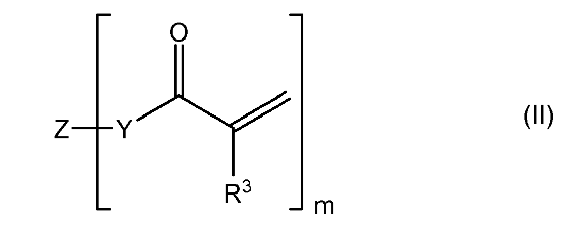

Der Rest R³ steht dabei für ein Wasserstoffatom oder für eine Methylgruppe. Der Index m steht für einen Wert von 2 bis 5. Weiterhin steht Z für ein Polyol nach Entfernung von m Hydroxylgruppen und Y steht für O oder für NR', wobei R' für einen Kohlenwasserstoffrest oder für ein Wasserstoffatom, bevorzugt für ein Wasserstoffatom, steht.

Die Verbindung der Formel (II) ist insbesondere ausgewählt aus der Gruppe bestehend aus Ethylenglykoldi(meth)acrylat, 1,3- und 1,4-Butandioldi-(meth)acrylat, 1,6-Hexandioldi(meth)acrylat, ethoxyliertem und propoxyliertem Neopentylglykoldi(meth)acrylat, propoxyliertem Glyceryltri(meth)acrylat, Trimethylolpropantri(meth)acrylat, Trimethylolpropandi(meth)acrylat, ethoxyliertem Trimethylolpropantri(meth)acrylat, modifiziertem Pentaerythritol-tri(meth)acrylat, propoxyliertem ethoxyliertem Pentaerythritoltetra(meth)acrylat, Ditrimethylolpropantetra(meth)acrylat und Dipentaerythritolpenta(meth)acrylat.

Insbesondere steht m in der Verbindung der Formel (II) für einen Wert von 2 und Z steht für ein polymeres Polyol nach Entfernung von zwei OH-Gruppen. Dieses polymere Polyol ist dabei insbesondere ein Polyalkylenpolyol, ein Polyoxyalkylenpolyol oder ein Polyurethanpolyol; ein polyhydroxyfunktionelles Ethylen-Propylen-Dien-, Ethylen-Butylen-Dien- oder Ethylen-Propylen-Dien-Copolymer; ein polyhydroxyfunktionelles Copolymer aus Dienen wie 1,3-Butandien oder Diengemischen und Vinylmonomeren wie Styrol, Acrylnitril oder Isobutylen, ein polyhydroxyfunktionelles Polybutadienpolyol; ein polyhydroxyfunktionelles Acrylonitril/Butadien-Copolymer; oder ein Polysiloxanpolyol.

Beispielsweise sind derartige di- oder trifunktionelle (Meth)acrylate ausgewählt aus der Gruppe bestehend aus Polyethylenglykoldi(meth)acrylat wie Diethylenglykoldi(meth)acrylat, Triethylenglykoldi(meth)acrylat, Tetra-ethylenglykoldi(meth)acrylat; Polypropylenglykoldi(meth)acrylat wie Dipropylen-glykoldi(meth)acrylat, Tripropylenglykoldi(meth)acrylat; und Tris-(2-hydroxyethyl)-isocyanurattri(meth)acrylat.

Weiterhin geeignet ist Z ein Diphenol, insbesondere ein alkoxyliertes Diphenol, nach Entfernung von zwei OH-Gruppen, bevorzugt ethoxyliertes Bisphenol A. Beispielsweise ist ein derartiges difunktionelles (Meth)acrylat unter dem Handelsnamen Sartomer^{®} SR 348 kommerziell erhältlich von der Firma Sartomer Company, Inc., USA.

Als weitere radikalisch polymerisierbare Bestandteile geeignet sind beispielsweise auch difunktionelle (Meth)acrylate wie Epoxy(meth)acrylate, insbesondere Epoxy(meth)acrylate, welche aus der Umsetzung von Bisphenol-A-diglycidylether mit (Meth)acrylsäure erhältlich sind. Beispielsweise ist ein derartiges difunktionelles (Meth)acrylat unter dem Handelsnamen Sartomer^{®} CN 104 kommerziell erhältlich von der Firma Sartomer Company, Inc., USA.

Geeignete polyhydroxyterminierte Acrylnitril/Butadien-Copolymere werden typischerweise aus carboxylterminierten Acrylnitril/Butadien-Copolymeren, welche beispielsweise unter dem Namen Hypro^{®} (früher Hycar^{®}) CTBN von Emerald Performance Materials, LLC, USA, kommerziell erhältlich sind, und Epoxiden oder Aminoalkoholen hergestellt.

Derartige geeignete polymerisierbaren Bestandteile der Formel (II) sind beispielsweise auch kommerziell erhältlich von der Firma Kraton Polymers, USA, oder unter den Handelsnamen Hypro^{®} VTB und Hypro^{®} VTBNX von der Firma Emerald Performance Materials, LLC, USA.

Beim radikalisch polymerisierbaren Bestandteil handelt es sich insbesondere um ein Polyurethan(meth)acrylat. Derartige Verbindungen sind typischerweise, in einer dem Fachmann bekannten Art und Weise, herstellbar aus der Reaktion von mindestens einem Polyisocyanat, insbesondere einem Diisocyanat, und einer (Meth)acrylsäure, einem (Meth)acrylamid oder einem (Meth)acrylsäureester, welcher eine Hydroxylgruppe aufweist. Gegebenenfalls kann das Diisocyanat vor der Umsetzung mit (Meth)acrylsäure, einem (Meth)acrylamid oder einem (Meth)acrylsäureester, welcher eine Hydroxylgruppe aufweist, mit mindestens einem Polyol, insbesondere einem Diol, in einem dem Fachmann bekannten Verfahren zu einem Isocyanatgruppen aufweisenden Polyurethanpolymer umgesetzt werden.

Zur Umsetzung mit den Isocyanatgruppen des Polyisocyanats eignen sich insbesondere Hydroxyalkyl(meth)acrylate wie Hydroxypropylacrylat (HPA), Hydroxypropylmethacrylat (HPMA), Hydroxybutylacrylat (HBA) oder Hydroxybutylmethacrylat (HBMA), bevorzugt Hydroxyethylacrylat (HEA) oder Hydroxyethylmethacrylat (HEMA), oder ein Monohydroxypoly(meth)acrylat eines Polyols, bevorzugt von Glycerin oder Trimethylolpropan.

Polyurethan(meth)acrylate können ebenfalls hergestellt werden durch Veresterung eines Hydroxylgruppen aufweisenden Polyurethanpolymers mit (Meth)acrylsäure.

Weiterhin können Polyurethan(meth)acrylate hergestellt werden durch die Umsetzung eines (Meth)acrylsäureesters, welches mindestens eine Isocyanatgruppe aufweist, mit einem Hydroxylgruppen aufweisenden Polyurethanpolymer oder mit einem Polyol, wie sie beispielsweise im vorliegenden Dokument beschrieben sind. Als (Meth)acrylsäureester, welches mindestens eine Isocyanatgruppe aufweist, eignet sich beispielsweise 2-Isocyanatoethylmethacrylat.

Als Polyisocyanate eignen sich handelsübliche Polyisocyanate, insbesondere Diisocyanate.

Beispielsweise sind geeignete Diisocyanate 1,6-Hexamethylendiisocyanat (HDI), 2-Methylpentamethylen-1,5-diisocyanat, 2,2,4- und 2,4,4-Trimethyl-1,6-hexamethylendiisocyanat (TMDI), 1,12-Dodecamethylendiisocyanat, Lysin- und Lysinesterdiisocyanat, Cyclohexan-1,3-diisocyanat, Cyclohexan-1,4-diisocyanat, 1-Isocyanato-3,3,5-trimethyl-5-isocyanatomethyl-cyclohexan (= Isophorondiisocyanat oder IPDI), Perhydro-2,4'-diphenylmethandiisocyanat und Perhydro-4,4'-diphenylmethandiisocyanat, 1,4-Diisocyanato-2,2,6-trimethylcyclohexan (TMCDI), 1,3- und 1,4-Bis-(isocyanatomethyl)-cyclohexan, m- und p-Xylylendiisocyanat (m- und p-XDI), m- und p-Tetramethyl-1,3-xylylendiisocyanat, m- und p-Tetramethyl-1,4-xylylendiisocyanat, Bis-(1-Isocyanato-1-methylethyl)-naphthalin, 2,4- und 2,6-Toluylendiisocyanat (TDI), 4,4'-, 2,4'- und 2,2'-Diphenylmethandiisocyanat (MDI), 1,3- und 1,4-Phenylendiisocyanat, 2,3,5,6-Tetramethyl-1,4-diisocyanatobenzol, Naphthalin-1,5-diisocyanat (NDI), 3,3'-Dimethyl-4,4'-diisocyanatodiphenyl (TODI), Oligomere und Polymere der vorgenannten Isocyanate, sowie beliebige Mischungen der vorgenannten Isocyanate.

Geeignete Polyole sind insbesondere Polyetherpolyole, Polyesterpolyole und Polycarbonatpolyole sowie Mischungen dieser Polyole. Beispielsweise sind geeignete Polyole aufgelistet als Polyole **P** in der europäischen Patentanmeldung EP08169631.2, deren gesamte Offenbarung hiermit durch Bezugnahme eingeschlossen wird.

Bevorzugt ist das Polyol ein Diol, insbesondere Polyoxypropylendiol oder Polyoxybutylendiol. Meist bevorzugt handelt es sich bei den Polyolen um möglichst unpolare Polyole.

Bevorzugt handelt es sich beim radikalisch polymerisierbaren Bestandteil um ein Elastomer, insbesondere um ein Polyurethan(meth)acrylat und/oder ein vinylterminiertes Acrylonitril/Butadien-Copolymer.

Bevorzugt umfasst die Zusammensetzung weiterhin mindestens einen Haftvermittler für (meth)acrylatbasierende Zusammensetzungen. Als derartige Haftvermittler eignen sich insbesondere eine (Meth)acrylsäure, ein Metall-(meth)acrylat oder ein (Meth)acrylat der Formel (I).

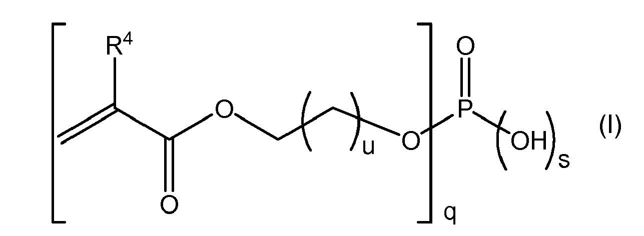

Dabei steht der Rest R⁴ entweder für ein Wasserstoffatom oder für eine Methylgruppe. Der Index u steht für einen Wert von 1 bis 15, insbesondere von 1 bis 5, bevorzugt von 1 bis 3. Der Index q steht für einen Wert von 1 bis 3 und der Index s für einen Wert von 3 minus q.

Bevorzugte (Meth)acrylate der Formel (1) sind 2-Methacryloyloxyethylphosphat, Bis(2-Methacryloyloxyethyl)phosphat sowie Tris(2-Methacryloyloxyethyl)phosphat und Mischungen davon.

Bevorzugte Metall(meth)acrylate sind Metall(meth)acrylate von Calcium, Magnesium oder Zink, welche eine Hydroxylgruppe und/oder (Meth)-acrylsäure oder (Meth)acrylat als Ligand oder Anion aufweisen. Besonders bevorzugte Metall(meth)acrylate sind Zinkdi(meth)acrylat, Calciumdi(meth)-acrylat, Zn(OH)(meth)acrylat und Magnesiumdi(meth)acrylat.

Metall(meth)acrylate haben die Eigenschaft, die Festigkeit, die Haftung und die Temperaturbeständigkeit von ausgehärteten (meth)acrylbasierenden Zusammensetzungen zu steigern, ohne dabei die Flexibilität und die Bruchdehnung in beeinträchtigendem Masse zu beeinflussen.

Bevorzugt handelt es sich beim Haftvermittler für (meth)acrylatbasierende Zusammensetzungen um Zinkdi(meth)acrylat.

Der Anteil des gegebenenfalls vorhandenen Haftvermittlers an der gesamten Zusammensetzung beträgt vorzugsweise von 0.01 bis 15 Gew.-%, insbesondere 0.5 bis 12 Gew.-%, bevorzugt von 2 bis 10 Gew.-%.

Weiterhin kann die Zusammensetzung weiterhin mindestens einen Radikalbildner umfassen.

Der Radikalbildner ist insbesondere ein Peroxid, ein Hydroperoxid oder ein Perester. Meist bevorzugt ist der Radikalbildner Dibenzoylperoxid.

Typischerweise weist die Zusammensetzung weiterhin mindestens einen Katalysator für die Radikalbildung auf. Dieser Katalysator ist insbesondere ein tertiäres Amin, ein Übergangsmetallsalz oder ein Übergangsmetallkomplex. Beispielsweise sind solche geeignete tertäre Amine aromatische Amine, insbesondere ausgewählt aus der Gruppe bestehend aus N,N-Dimethylanilin, N,N-Diethylanilin, N,N-Bis(hydroxyalkyl)anilin wie N,N-Bis(2-hydroxyethyl)anilin, N,N-Alkylhydroxyalkylanilin wie N-Ethyl-N-hydroxyethylanilin, N,N-Dimethyl-p-toluidin, N,N-Diethyl-p-toluidin, N-Methyl-N-hydroxyethyl-p-toluidin, N,N-Bis(2-hydroxyethyl)-p-toluidin sowie alkoxylierte N,N-Bis-(hydroxyethyl)-p-toluidine, N-ethoxyliertes p-Toluidin, N,N-Bis(2-hydroxyethyl)-xylidin, N-Alkylmorpholin und Mischungen davon. Übergangmetallsalze und Übergangsmetallkomplexe sind beispielsweise Salze und Komplexe von Cobalt, Nickel, Kupfer, Mangan oder Vanadium.

Weitere bevorzugte Katalysatoren für die Radikalbildung sind beispielsweise beschrieben in den Abschnitten [0041] bis [0054] von US 2002/0007027 A1, dessen gesamte Offenbarung hiermit durch Bezugnahme eingeschlossen wird.

Der Katalysator für die Radikalbildung wird üblicherweise in einer Menge von 0.01 bis 3 Gew.-%, insbesondere von 0.1 bis 2 Gew.-%, bezogen auf die Zusammensetzung, eingesetzt.

Als Radikalbildner können beispielsweise auch Moleküle eingesetzt werden, welche unter Einfluss von Wärme oder von elektromagnetischer Strahlung Radikale bilden, die dann zur Polymerisation der Zusammensetzung führen. Typischerweise sind dies thermisch aktivierbare Radikalbildner und Photoinitiatoren.

Als thermisch aktivierbare Radikalbildner eignen sich solche, welche bei Raumtemperatur noch genügend stabil sind, bei leicht erhöhter Temperatur aber bereits Radikale bilden, beispielsweise Azo-Bis-Isobutyronitril (AIBN).

Als Photoinitiator werden Radikalbildner bezeichnet, welche unter dem Einfluss von elektromagnetischer Strahlung Radikale bilden. Insbesondere geeignet ist ein Photoinitiator, welcher bei einer Bestrahlung mit einer elektromagnetischen Strahlung der Wellenlänge von 230 nm bis 400 nm Radikale bildet und bei Raumtemperatur flüssig ist. Beispielsweise sind derartige Photoinitiatoren ausgewählt aus der Gruppe bestehend aus α-Hydroxyketonen, Phenylglyoxylaten, Monoacylphosphinen, Diacylphosphinen, Phosphinoxiden und Mischungen davon.

Weiterhin kann die Zusammensetzung neben den gegebenenfalls vorhandenen Haftvermittlern weitere geeignete Haftverbesserer aufweisen. Solche Haftverbesserer sind vorzugsweise Silane, insbesondere organofunktionelle Silane. Besonders geeignet sind dabei (Meth)acryloxyalkyltrialkoxysilane wie 3-Methacryloxypropyltrimethoxysilan, Glycidyloxyalkyltrialkoxysilane und dergleichen. Beispielsweise sind derartige geeignete Silane kommerziell erhältlich unter dem Handelsnamen Dynasylan^{®} MEMO von der Firma Evonik Degussa GmbH, Deutschland.

Der Anteil des Haftverbesserers an der gesamten Zusammensetzung beträgt vorzugsweise von 0.01 bis 12 Gew.-%, insbesondere von 0.5 bis 8 Gew.-%.

Weiterhin kann die Zusammensetzung zusätzlich mindestens ein Core-Shell Polymer enthalten. Core-Shell Polymere bestehen aus einem elastischen Kernpolymer (Core) und einem starren Schalen-Polymer (Shell). Besonders geeignete Core-Shell Polymere bestehen aus einer starren Schale eines starren thermoplastischen Polymers, welcher auf einem Kern aus vernetztem elastischem Acrylat- oder Butadien-Polymer aufgepfropft ist.

Besonders geeignete Core-Shell Polymere sind diejenigen, welche im radikalisch polymerisierbaren Monomer **M** aufquellen, sich aber darin nicht lösen.

Bevorzugte Core-Shell Polymere sind so genannte MBS Polymere, welche beispielsweise kommerziell unter dem Handelsnamen Clearstrength^{®} von Arkema Inc., USA, oder Paraloid^{®} von Rohm and Haas, USA, erhältlich sind. Die Core-Shell Polymere werden bevorzugt in einer Menge von 0.01 bis 30 Gew.-%, insbesondere von 10 bis 25 Gew.-%, bezogen auf die gesamte Zusammensetzung, eingesetzt.

Die Zusammensetzung kann weiterhin zusätzliche feste oder flüssige Zähigkeitsverbesserer enthalten. Unter einem "Zähigkeitsverbesserer" wird hierbei ein Zusatz zu einer Polymermatrix verstanden, der bereits bei geringen Zuschlägen von 0.1 bis 15 Gew.-%, insbesondere von 0.5 bis 8 Gew.-%, bezogen auf das Gesamtgewicht der Zusammensetzung, eine deutliche Zunahme der Zähigkeit bewirkt und somit in der Lage ist, höhere Biege-, Zug-, Schlag- oder Stossbeanspruchung aufzunehmen, bevor die Matrix einreisst oder bricht.

Neben den vorhergehend beschriebenen Core-Shell-Polymeren eignen sich als feste Zähigkeitsverbesserer beispielsweise organische ionengetauschte Schichtminerale, wie sie dem Fachmann unter den Begriffen Organoclay oder Nanoclay bekannt sind; Polymere oder Blockcopolymere, insbesondere der Monomere Styrol, Butadien, Isopren, Chloropren, Acrylnitril und Methylmethacrylat, sowie chlorsulfoniertes Polyethylen; und amorphes Siliciumdioxid.

Derartige geeignete Copolymere sind beispielsweise auch kommerziell erhältlich von der Firma Kraton Polymers, USA. Geeignete chlorsulfonierte Polyethylene sind beispielsweise kommerziell erhältlich unter dem Handelsnamen Hypalon^{®} von der Firma DuPont Performance Elastomers, LLC, USA.

Als flüssige Zähigkeitsverbesserer eignen sich insbesondere Flüssigkautschuke, wie sie unter den Handelsnahmen Hypro^{®} CTBN, ETBN oder VTBN kommerziell erhältlich sind von der Firma Emerald Performance Materials, LLC, USA, sowie epoxidharzmodifizierte Flüssigkautschuke des Typs Hypro^{®} CTBN.

Weiterhin kann die Zusammensetzung zusätzlich mindestens einen Füllstoff enthalten. Insbesondere geeignet sind dabei natürliche, gemahlene oder gefällte Calciumcarbonate (Kreiden), welche gegebenenfalls mit Fettsäuren und/oder deren Derivaten, insbesondere Stearaten, beschichtet sind, Montmorillonite, Bentonite, Bariumsulfat (BaSO₄, auch Baryt oder Schwerspat genannt), calcinierte Kaoline, Quarzmehl, Aluminiumoxide, Aluminiumhydroxide, Kieselsäuren, insbesondere pyrogene Kieselsäuren, modifizierte Rizinusölderivate und Polymerpulver oder Polymerfasern. Bevorzugt sind Calciumcarbonate, meist bevorzugt sind beschichtete Calciumcarbonate.

Der Füllstoff wird üblicherweise in einer Menge von 0.01 bis 50 Gew.-%, insbesondere von 10 bis 30 Gew.-%, bevorzugt 15 bis 20 Gew.-%, bezogen auf die gesamte Zusammensetzung, eingesetzt.

Die Zusammensetzung kann weiterhin zusätzlich mindestens ein Epoxidharz enthalten, welches durchschnittlich mehr als eine Epoxidgruppe pro Molekül aufweist. Vorzugsweise handelt sich dabei um Diglycidylether von Bisphenol A, von Bisphenol F sowie von Bisphenol A/F. Die Bezeichnung "A/F" verweist hierbei auf eine Mischung von Aceton mit Formaldehyd, welche als Edukt bei dessen Herstellung verwendet wird. Bevorzugt stellt das Epoxidharz ein Epoxid-Flüssigharz dar. Weiterhin geeignet stellt das Epoxidharz eine Mischung von Epoxid-Flüssigharz mit Epoxid-Festharz dar.

Geeignete Epoxid-Flüssigharze sind beispielsweise unter den Handelsnamen Araldite^{®} GY 250, Araldite^{®} PY 304, Araldite^{®} GY 282 von der Firma Huntsman International LLC, USA, oder D.E.R.^{®} 331 oder D.E.R.^{®} 330 von der Firma The Dow Chemical Company, USA, oder unter dem Handelsnamen Epikote^{®} 828 oder Epikote^{®} 862 von der Firma Hexion Specialty Chemicals Inc, USA, kommerziell erhältlich.

Die Zusammensetzung kann gegebenenfalls zusätzlich noch weitere Bestandteile enthalten. Derartige zusätzliche Bestandteile sind insbesondere, Farbstoffe, Pigmente, Inhibitoren, UV- und Hitzestabilisatoren, Antistatika, Flammschutzmittel, Biozide, Weichmacher, Wachse, Verlaufsmittel, Thixotropierungsmittel, Abstandhalter und weitere dem Fachmann bekannte gängige Rohstoffe und Additive.

Vorzugsweise handelt es sich bei der Zusammensetzung um eine zweikomponentige Zusammensetzung, wobei zwei Komponenten **K1** und **K2** bis zur Applikation getrennt voneinander aufbewahrt werden. Typischerweise beinhaltet die erste Komponente **K1** insbesondere jene Inhaltsstoffe der beschriebenen Zusammensetzung, welche radikalisch polymerisierbare Gruppen aufweisen. Die zweite Komponente **K2** beinhaltet insbesondere die Radikalbildner. Weiterhin können in einer zweikomponentigen Zusammensetzung auch andere Bestandteile, insbesondere solche, welche durch Reaktion untereinander die Lagerstabilität der Zusammensetzung beeinträchtigen würden, getrennt aufbewahrt werden.

Insbesondere handelt es sich bei der Zusammensetzung um eine zweikomponentige Zusammensetzung, wobei die erste Komponente **K1** das (Meth)acrylatmonomer **R** umfasst und die zweite Komponente **K2** mindestens einen Radikalbildner umfasst.

Bevorzugt weisen in beschriebenen zweikomponentigen Zusammensetzungen die Komponente **K1** das (Meth)acrylatmonomer **R** sowie weitere gegebenenfalls vorhandene Bestandteile wie polymerisierbare Bestandteile, Haftverbesserer, Core-Shell Polymere, Katalysatoren für die Radikalbildung, Schlagzähigkeitsmodifikatoren, Metalloxide, Pigmente und Füllstoffe und die Komponente **K2** den Radikalbildner sowie gegebenenfalls vorhandene Pigmente, Füllstoffe und Epoxidharze auf. Das Volumenverhältnis von **K1** zu **K2** beim Mischen liegt insbesondere im Bereich von 1:1 bis 10:1.

In gewissen Fällen kann es vorteilhaft sein, die beiden Komponenten **K1** und **K2** unterschiedlich einzufärben. Dadurch lässt sich bei der Mischung der Komponenten die Mischgüte überprüfen und Mischfehler lassen sich frühzeitig erkennen. Ebenfalls lässt sich durch diese Massnahme qualitativ überprüfen, ob das vorgesehene Mischverhältnis eingehalten wurde.

Eine derartige zweikomponentige Zusammensetzung wird typischerweise in einer Verpackung aufbewahrt, welche zwei von einander getrennte Kammern aufweist. Die Komponente **K1** ist hierbei in der einen Kammer und die Komponente **K2** ist in der anderen Kammer der Verpackung vorhanden. Geeignete Verpackungen sind beispielsweise Doppelkartuschen, wie Zwillings-oder Koaxialkartuschen, oder Mehrkammerschlauchbeutel mit Adapter. Bevorzugt erfolgt das Mischen der beiden Komponenten **K1** und **K2** mit Hilfe eines Statikmischers, welcher auf die Verpackung mit zwei Kammern aufgesetzt werden kann.

Solche geeigneten Verpackungen sind beispielsweise beschrieben in US 2006/0155045 A1, WO 2007/096355 A1 und in US 2003/0051610 A1, deren gesamte Offenbarung hiermit durch Bezugnahme eingeschlossen wird.

In einer grosstechnischen Anlage werden die beiden Komponenten **K1** und **K2** typischerweise in Fässern oder Hobbocks voneinander getrennt aufbewahrt und bei der Applikation, beispielsweise mittels Zahnradpumpen, ausgepresst und vermischt. Die Zusammensetzung kann dabei von Hand oder in einem automatisierten Prozess mittels Roboter auf ein Substrat aufgetragen werden.

Die Aushärtung der erfindungsgemässen Zusammensetzung erfolgt durch eine radikalische Polymerisationsreaktion der (Meth)acrylatmonomere **R** und gegebenenfalls weiterer radikalisch polymerisierbarer Bestandteile in der Zusammensetzung. Der Ablauf, insbesondere die Geschwindigkeit, der zur Aushärtung der Zusammensetzung führenden Reaktionen, kann durch die Wahl der eingesetzten Bestandteile eingestellt werden. Typischerweise verläuft die Aushärtung der Zusammensetzung in der Art, dass die Zusammensetzung trotz einer langen Offenzeit bereits in einem frühen Stadium eine hohe Anfangsfestigkeit erhält.

In einem zweiten Aspekt betrifft die vorliegende Erfindung ein Verfahren zur Verbesserung der Haftung von reaktiven, (meth)acrylatbasierenden Zusammensetzungen auf verzinkten Oberflächen, wobei der (meth)acrylat-basierenden Zusammensetzung eine Metallverbindung ausgewählt aus der Gruppe bestehend aus MgO, CaO und Ca(OH)₂ zugegeben wird.

Bei der reaktiven, (meth)acrylatbasierenden Zusammensetzung handelt es sich insbesondere um eine Zusammensetzung, wie sie vorhergehend beschrieben worden ist. Bevorzugt umfasst die reaktive, (meth)acrylat-basierende Zusammensetzung mindestens einen Haftvermittler für (meth)-acrylatbasierende Zusammensetzungen, wie er vorhergehend beschreiben worden ist.

Ebenso handelt es sich bei der verzinkten Oberfläche insbesondere um eine verzinkte Oberfläche, wie sie vorhergehend beschrieben worden ist.

In einem weiteren Aspekt betrifft die vorliegende Erfindung einen Schichtkörper bestehend aus einem Substrat, einer auf dem Substrat durch Verzinken aufgebrachten Oberfläche und einer Zusammensetzung umfassend
a) mindestens ein (Meth)acrylatmonomer **R;** sowie
b) mindestens eine Metallverbindung ausgewählt aus der Gruppe bestehend aus MgO, CaO und Ca(OH)₂,
wobei sich die Zusammensetzung auf der durch Verzinken aufgebrachten Oberfläche des Substrats befindet.

In einem weiteren Aspekt betrifft die Erfindung eine Zusammensetzung zum Verkleben, Abdichten oder Beschichten von verzinkten Oberflächen umfassend
a) mindestens ein (Meth)acrylatmonomer **R;** sowie
b') Ca(OH)₂.

Bezüglich der Beschaffenheit und der weiteren Bestandteile, welche optional in der Zusammensetzung enthalten sein können, entspricht die erfindungsgemässe Zusammensetzung jener, welche im ersten Aspekt der vorliegenden Erdfindung beschrieben worden ist. Bevorzugt umfasst die Zusammensetzung mindestens einen Haftvermittler für (meth)acrylatbasie-rende Zusammensetzungen, wie er vorhergehend beschreiben worden ist.

Weiterhin umfasst die vorliegende Erfindung eine ausgehärtete Zusammensetzung, welche aus einer vorhergehend beschriebenen, erfindungsgemässen Zusammensetzung durch einen Härtungsprozess erhältlich ist. Insbesondere handelt es sich bei der Zusammensetzung um eine zweikomponentige Zusammensetzung, so dass die ausgehärtete Zusammensetzung durch ein zumindest partielles Mischen der beiden Komponenten **K1** und **K2** erhältlich ist.

### Beispiele

Im Folgenden sind Ausführungsbeispiele aufgeführt, welche die beschriebene Erfindung näher erläutern sollen. Selbstverständlich ist die Erfindung nicht auf diese beschriebenen Ausführungsbeispiele beschränkt.

### Beschreibung der Prüfmethoden

Die **Zugscherfestigkeit** ("ZSF") wurde in Anlehnung an ISO 4587/DIN EN 1465 auf einer Zugmaschine Zwick/Roell Z005 bestimmt, wobei jeweils zwei gleiche Substrate miteinander verklebt wurden (Klebefläche: 12x25 mm; Schichtstärke der Verklebung: 0.3 mm mm; Messgeschwindigkeit: 10 mm/min; Substrate: nicht phsosphatierter Stahl (100x25x2 mm), Typenbezeichnung H320 LA ZE50/50 AO von Hövelmann & Lueg GmbH, Deutschland, mit Aceton entfettet und mit Isopropanol gereinigt; und Aluminium Prüfkörper (100x25x2 mm) von Rocholl, Deutschland (AlMg₃-Legierung), Temperatur: 23°C (falls nicht anders genannt)). Die Prüfung der Zugscherfestigkeit erfolgte nach Lagerungen der verklebten Substrate während einem Tag bei 23°C und 50% relative Luftfeuchtigkeit.

### Herstellung eines Polvurethanmethacrylats PUMA auf Basis eines Polvethers

Es wurden 800 g Polyetherdiol (berechnetes Mₙ = 8'000 g/mol; OH-Zahl 13.9 mg KOH/g; Wassergehalt 0.018 Gew.-%) und 45.8 g 1-Isocyanato-3,3,5-trimethyl-5-isocyanatomethyl-cyclohexan (IPDI; Desmodur^{®} I, Bayer MaterialScience AG, Deutschland) in Anwesenheit von Dibutylzinndilaurat bei 90°C zu einem Isocyanatgruppen terminierten Polyurethanpolymer mit einem titrimetrisch bestimmten Gehalt an freien Isocyanatgruppen von 1 Gew.-% umgesetzt. Anschliessend wurden 29.6 g Hydroxyethylmethacrylat (HEMA), unter dem Handelsnamen Rocryl^{®} 400 kommerziell erhältlich von der Firma Rohm and Haas, USA, zugegeben, welches mit den freien Isocyanatgruppen zum Polyurethanmethacrylat ***PUMA*** reagiert. Erhalten wird eine farblose Flüssigkeit mit einem NCO-Gehalt von ≤ 0.03 Gew.-%.

### Herstellung der Zusammensetzungen

Es wurden die folgenden Zusammensetzungen hergestellt:
Als Komponente **K1** wurden die in den Tabellen 1 und 2 aufgeführten Bestandteile in den angegebenen Gewichtsanteilen in einem Dissolver bei einer Temperatur von maximal 80 °C miteinander vermischt und eingerührt, bis eine makroskopisch homogene Paste erhalten wurde.
Als Komponente **K2** wurden 50 Gew.-% Kreide, 10 Gew.-% Dibenzoylperoxid und 40 Gew.-% Weichmacher auf Phthalatbasis in einem Dissolver miteinander vermischt.

Die hergestellten Komponenten **K1** und **K2** wurden in die getrennten Kammern von Doppelkartuschen eingefüllt und bei der Applikation in einem Volumenverhältnis von 10:1 mittels Statikmischer vermischt.

**Tabelle 1 Zusammensetzungen 1 bis 3 und die Referenzbeispiele 4 bis 10 in Gewichtsanteilen sowie die Resultate;**

| | ***1*** | ***2*** | ***3*** | ***4*** | ***5*** | ***6*** | ***7*** | ***8*** | ***9*** | ***10*** |
|---|---|---|---|---|---|---|---|---|---|---|
| THFMA | 46.5 | 46.5 | 46.5 | 46.5 | 46.5 | 46.5 | 46.5 | 46.5 | 46.5 | 46.5 |
| Zinkdimethacrylat | 10 | 10 | 10 | 10 | 10 | 10 | 10 | 10 | 10 | 10 |
| Core-Shell Polymer | 20 | 20 | 20 | 20 | 20 | 20 | 20 | 20 | 20 | 20 |
| ***PUMA*** | 20 | 20 | 20 | 20 | 20 | 20 | 20 | 20 | 20 | 20 |
| Katalysator ^{a} | 1.5 | 1.5 | 1.5 | 1.5 | 1.5 | 1.5 | 1.5 | 1.5 | 1.5 | 1.5 |
| MgO | 2 | | | | | | | | | |
| CaO | | 2 | | | | | | | | |
| Ca(OH)₂ | | | 2 | | | | | | | |
| Mg(OH)₂ | | | | 2 | | | | | | |
| ZnO | | | | | 2 | | | | | |
| Zn(OH)₂ | | | | | | 2 | | | | |
| BaO | | | | | | | 2 | | | |
| Ba(OH)₂ | | | | | | | | 2 | | |
| Al₂O₃ | | | | | | | | | 2 | |
| | | | | | | | | | | |
| ZSF [MPa] | 11.3 | 11.6 | 11.1 | k.H. | k.H. | k.H. | k.H. | k.H. | k.H. | k.H. |

| | | | | | | | | | | |
|---|---|---|---|---|---|---|---|---|---|---|
| ^{a} Katalysator für Radikalbildung (tertiäres Amin auf Toluidinbasis); k.H. steht für "keine Haftung". | | | | | | | | | | |

**Tabelle 2 Zusammensetzungen 11 bis 13 und Referenzbeispiel 14 in Gewichtsanteilen sowie die Resultate;**

| | ***11*** | ***12*** | ***13*** | ***14*** |
|---|---|---|---|---|
| MMA | 46.5 | 47.25 | 45 | 47 |
| Zinkdimethacrylat | 8 | 8 | 8 | 8 |
| Core-Shell Polymer | 25 | 25 | 25 | 25 |
| ***PUMA*** | 18.5 | 18.5 | 18.5 | 18.5 |
| Katalysator ^{a} | 1.5 | 0.75 | 1.5 | 1.5 |
| MgO | 0.5 | 0.5 | 2 | 0 |
| | | | | |
| ZSF (AIMg₃) [MPa] | 17.1 | 15.3 | 13.7 | 17.0 |
| ZSF (Stahl) [MPa] | 20.47 | 18.23 | 16.6 | 0.61 |

| | | | | |
|---|---|---|---|---|
| ^{a} Katalysator für Radikalbildung (tertiäres Amin auf Toluidinbasis). | | | | |

## Patentansprüche

1. Verwendung einer Zusammensetzung umfassend
a) mindestens ein (Meth)acrylatmonomer **R;** sowie
b) mindestens eine Metallverbindung ausgewählt aus der Gruppe bestehend aus MgO, CaO und Ca(OH)₂,
als Klebstoff, Dichtstoff oder als Beschichtung für verzinkte Oberflächen.

2. Verwendung gemäss Anspruch 1, **dadurch gekennzeichnet, dass** die verzinkte Oberfläche ein verzinktes Metall oder eine verzinkte Metalllegierung ist.

3. Verwendung gemäss einem der vorhergehenden Ansprüche, **dadurch gekennzeichnet, dass** die verzinkte Oberfläche nicht phosphatiert ist.

4. Verwendung gemäss einem der vorhergehenden Ansprüche, **dadurch gekennzeichnet, dass** die verzinkte Oberfläche ein nicht phosphatierter, verzinkter Stahl ist.

5. Verwendung gemäss einem der vorhergehenden Ansprüche, **dadurch gekennzeichnet, dass** das (Meth)acrylatmonomer **R** ausgewählt ist aus der Gruppe bestehend aus Methylmethacrylat (MMA), Tetrahydrofurfurylmethacrylat (THFMA), Cyclohexylmethacrylat (CHMA), Isobornylmethacrylat (IBMA), Trimethylcyclohexylmethacrylat (TMCHMA), Hydroxyethylmethacrylat (HEMA) und Hydroxypropylmethacrylat (HPMA).

6. Verwendung gemäss einem der vorhergehenden Ansprüche, **dadurch gekennzeichnet, dass** die Zusammensetzung mindestens einen Haftvermittler für (meth)acrylatbasierende Zuammensetzungen enthält.

7. Verwendung gemäss Anspruch 6, **dadurch gekennzeichnet, dass** der Haftvermittler für (meth)acrylatbasierende Zusammensetzungen ein Metall(meth)acrylat oder eine Verbindung der Formel (I) ist 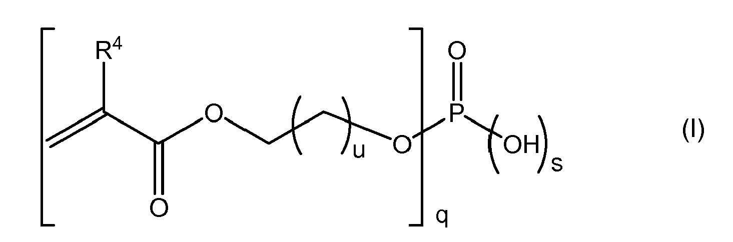 wobei
R⁴ entweder für ein Wasserstoffatom oder für eine Methylgruppe steht; der Index u für einen Wert von 1 bis 15 steht;
der Index q für einen Wert von 1 bis 3 steht; und
der Index s für einen Wert von 3 minus q steht.

8. Verwendung gemäss einem der Ansprüche 6 oder 7, **dadurch gekennzeichnet, dass** der Haftvermittler für (meth)acrylatbasierende Zusammensetzungen Zinkdi(meth)acrylat ist.

9. Verwendung gemäss einem der vorhergehenden Ansprüche, **dadurch gekennzeichnet, dass** die Zusammensetzung zusätzlich mindestens ein Elastomer, insbesondere ein Polyurethan(meth)acrylat und/oder ein vinylterminiertes Acrylonitril/Butadien-Copolymer, enthält.

10. Verwendung gemäss einem der vorhergehenden Ansprüche, **dadurch gekennzeichnet, dass** die Zusammensetzung zusätzlich mindestens ein Core-Shell-Polymer enthält.

11. Verwendung gemäss einem der vorhergehenden Ansprüche, **dadurch gekennzeichnet, dass** die Zusammensetzung zweikomponentig ist, wobei die erste Komponente **K1** das (Meth)acrylatmonomer **R** umfasst; und die zweite Komponente **K2** mindestens einen Radikalbildner umfasst.

12. Verfahren zur Verbesserung der Haftung von reaktiven, (meth)acrylatbasierenden Zusammensetzungen auf verzinkten Oberflächen, wobei der (meth)acrylatbasierenden Zusammensetzung eine Metallverbindung ausgewählt aus der Gruppe bestehend aus MgO, CaO und Ca(OH)₂ zugegeben wird.

13. Schichtkörper bestehend aus einem Substrat; einer auf dem Substrat durch Verzinken aufgebrachten Oberfläche; und einer Zusammensetzung umfassend
a) mindestens ein (Meth)acrylatmonomer **R;** sowie
b) mindestens eine Metallverbindung ausgewählt aus der Gruppe bestehend aus MgO, CaO und Ca(OH)₂,
wobei sich die Zusammensetzung auf der durch Verzinken aufgebrachten Oberfläche des Substrats befindet.

14. Zusammensetzung zum Verkleben, Abdichten oder Beschichten von verzinkten Oberflächen umfassend
a) mindestens ein (Meth)acrylatmonomer **R;** sowie
b') Ca(OH)₂.

15. Zusammensetzung gemäss Anspruch 14, **dadurch gekennzeichnet, dass** die Zusammensetzung zusätzlich mindestens einen Haftvermittler für (meth)acrylatbasierende Zusammensetzungen enthält.
